# EUROPEAN PATENT SPECIFICATION

(11) **EP 2 831 682 B1**
(45) Date of publication and mention of the grant of the patent: **07.03.2018**
(21) Application number: 13720540.7
(22) Date of filing: 29.03.2013
(51) Int. Cl.: G05B 19/042

(54) **A METHOD FOR ENGINEERING A DISTRIBUTED CONTROL SYSTEM AND AN ENGINEERING TOOL THEREOF**
VERFAHREN ZUR KONSTRUKTION EINES VERTEILTEN STEUERUNGSSYSTEMS UND KONSTRUKTIONSWERKZEUG DAFÜR
PROCÉDÉ D'INGÉNIERIE D'UN SYSTÈME DE COMMANDE DISTRIBUÉ, ET OUTIL D'INGÉNIERIE À CET EFFET

(30) Priority: 30.03.2012 IN 1256CH2012
(43) Date of publication of application: 04.02.2015
(73) Proprietor: ABB Schweiz AG, 5400 Baden (CH)
(72) Inventor: G, Abhilash, Hoysala Nagar Bangalore 560016 (IN); D, Rajasekaran, Banaswadi Bangalore (IN); BHOVI, Ramesh, Sankeshwar Karnataka 591313 (IN); SHRIVASTAVA, Sulabh, New Sarkanda Bilaspur Chattisgarh 495001 (IN); METHI, Kapil, Delhi 110095 (IN); KP, Jithin, Kozhikode 673633 (IN); PK, Biju, Bangalore 560048 (IN)
(74) Representative: Zimmermann & Partner Patentanwälte mbB
(86) International application number: PCT/IB2013/000555
(87) International publication number: WO 2013/144705

(56) References cited:
- WO-A1-2011/018684
- US-A1- 2011 191 500
- FENG XIA ET AL: "A framework-based approach to control system engineering following IEC61499", INDUSTRIAL ELECTRONICS SOCIETY, 2004. IECON 2004. 30TH ANNUAL CONFEREN CE OF IEEE BUSAN, SOUTH KOREA 2-6 NOV. 2004, PISCATAWAY, NJ, USA,IEEE, vol. 2, 2 November 2004 (2004-11-02), pages 1918-1923, XP010799105, DOI: 10.1109/IECON.2004.1431877 ISBN: 978-0-7803-8730-0
- MARTIJN N ROOKER ET AL: "Reconfigurable control in distributed automation systems", RECONFIGURABLE MECHANISMS AND ROBOTS, 2009. REMAR 2009. ASME/IFTOMM INTERNATIONAL CONFERENCE ON, IEEE, PISCATAWAY, NJ, USA, 22 June 2009 (2009-06-22), pages 705-714, XP031496750, ISBN: 978-88-89007-37-2

## Description

### TECHNICAL FIELD OF THE INVENTION

The present invention concerns Distributed Control Systems and more particularly, a method for engineering a Distributed Control System.

### BACKGROUND OF THE INVENTION

Distributed Control System (hereinafter DCS) are used to control process plants and play an important role in achieving automation within the plant. The control and automation functions for the process plant are achieved by engineering these control and automation functions through the various devices of the DCS.

A method of engineering is usually based on a standard, example IEC 61499 (International Electrotechnical Commission) that specifies system model consisting of device model, a resource model and application model for configuring the system. The device model provides for representing devices, its process interfaces, communication interfaces and also data flow for an event. Resources in the DCS may be configured, parameterized, started up, deleted and so on. The resource model provides for scheduling the functions that are provided with function block specifications. The application model provides for high level application and sub-application build and behaviour. An application may be distributed among several resources in the same or different devices.

An engineering process comprises steps of analysing inputs that come in form of P&I diagrams, Input/Output (I/O) point description and some additional user inputs and building a function block network based on the said inputs, connecting function blocks and creating applications based on preset devices/controllers.

Each device/controller type comes with its library which contains the types of Function blocks which can be used from the controller. As well controller types come with certain description of their capabilities like what interfaces they do support for communication. These controller type libraries appear in the engineering station toolbox. The engineer drag drops these function or application types into the function designers by following the guidelines like:
1. Physical location of the Field inputs and outputs and the wiring/cabling needs
2. Load the control logic and then check at runtime the CPU utilization
3. Communication logic is configured as standard interface (Communication) blocks and connected to control logic and exposed as data or events over the control networks.
4. The number of I/Os and their types decide the allocations and Controllers have access to limited I/Os or I/Os are directly attached to the controllers.
5. The engineers now select the controller types which will do the job with I/O information

These applications are attached with timing constraints and execution sequence is defined and downloaded to the devices so that they operate in the defined execution sequence.

In modem devices, intelligence can reside anywhere from sensors, I/Os, Controllers (Communication Interfaces or Control modules) and Human Machine Interface (running party Real-time parts and non-real time parts) creating a system that is capable of dynamic computing.

In a modem system, all data may be available on single bus (or able to be brought to single bus via proxies/ gateways) and it is possible to connect the devices dynamically.

The document "A framework-based approach to control system engineering following IEC61499" by Xia et. al., published in: The 30th Annual Conference of the IEEE Industrial Electronics Society, Nov. 2-5, 2004, Busan, Korea; p. 1918 ff., discloses a method for engineering a control system. So-called "intelligent devices" communicate with a fieldbus and the process control. Function blocks are stored in a function block repository. System requirements are specified, and a number of possible candidates of function blocks providing a functionality according to the requirements are provided. The function blocks are connected to form a control application.

The document WO 2011/018684 A1 discloses a method for engineering and configuration of devices for a function in a substation automation system. Using specified parameters and predefined type definitions, multiple process configuration outputs such as automatically creating function blocks and automatically performing connection between them are created.

The document "Reconfigurable control in distributed automation systems" by Rooker et. al., published in: IEEE International Conference on Reconfigurable Mechanisms and Robots, Jun. 22, 2009, Piscataway, NJ, USA; p. 705 ff., discloses a method for engineering a control system. In a reconfiguration operation, entire internal functional block data are transferred from an original function block to a new function block as a one-to-one replacement.

In order to exploit the capabilities of conventional devices and make the best of new technologies coming with newer devices with programmable intelligence and abilities for dynamic connections, there is a need for a more dynamic method for balanced application distribution across the devices in the control system.

In a modem system, proximity consideration may no longer be a constraint since with the wired broadband/wireless networks we can talk across quite good distances. Availability of all data on one bus means we can take various decisions based on the data as well as respond to the data across in a more distributed manner as well more locally. In order to be efficiently able to distribute and still work together as system the soft-marshaling/soft wiring and re-wiring on the fly needs to be dynamic.

The present invention aims at providing a method of engineering the DCSs which could take into account, all of afore mentioned structural and functional sophistications in a contemporary DCS.

### SUMMARY OF THE INVENTION

In one aspect of the invention, a method for engineering a DCS is provided as specified in claim 1.

According to aspects of the invention, the DCS has plurality of devices comprising of at least one Input/ Output (I/O) device and at least one controller device that are connected over the DCS network such that an I/O devices can communicate with at least one controller device. In a modem DCS any of the I/O device can communicate with any of the controller device and the process control/supervision activity associated with a controller may be carried out in any of the controller or the I/O device itself. The invention provides a method for engineering such a system. The method comprises multiple steps including requesting an user to input an application type and to select a solution variant from one or more solution variant options available in the engineering tool library for the requested application type. Based on the user input, at least one device from the plurality of available devices in the DCS is identified for configuration. Also, corresponding function blocks for the requested application type and solution variant are identified.

The function blocks are said to be comprising of plurality of function fragments that are linked together, the function fragments being configured in one or multiple devices. The instances of function fragments are created in the engineering tool and are arranged considering the identified at least one device (example an I/O device). The creation of the instances includes analysing the function fragments considering the involved device specifications, processing and communication overheads so that the overall functionality may be ascertained according to the DCS (processes, device or interaction) needs. The created instances and the suitable arrangement as per the analysis are used to configure the devices with the engineering tool. The engineering tool during analysis may dynamically rearrange the initially created instance of function fragment to satisfy one or more identified distributed control system needs.

Further, the analysed options involving function fragments for various solution variant options or devices or algorithm type (with algorithm step number) may be reported to gather user input to find the solution that is suitable for configuration. The engineering tool may also by itself select the most suitable combination of function fragment and devices for configuration.

In another aspect of the invention, an engineering tool using the method described in the invention is provided. The engineering tool has the required libraries of function blocks with algorithm type and algorithm step number and specifications associated with device type and communication block type used in the DCS. Further, the engineering tool has a module for creating function fragments for devices in the DCS and a module for analysing instances of function fragments for devices used in the DCS. The engineering tool performs configuration of the devices as per the created instances of function fragments.

### BRIEF DESCRIPTION OF DIAGRAMS

For a full and more complete understanding of the claimed invention, reference is herein made to the following figure:

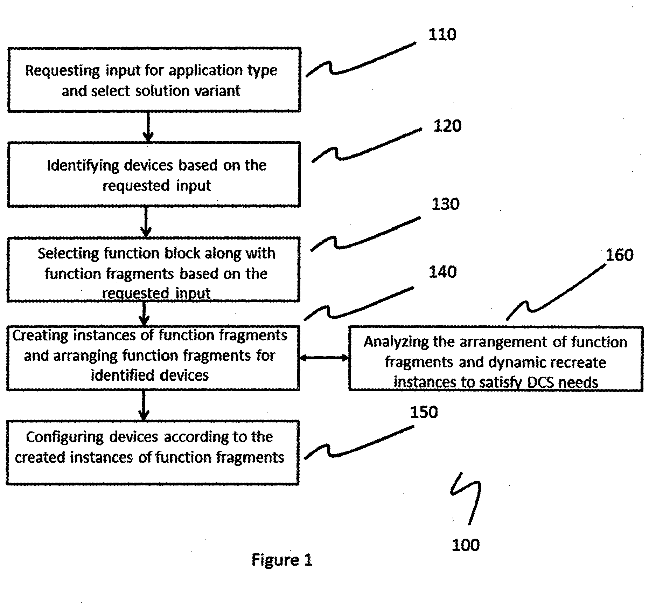

Figure 1 shows a block diagram of the method of engineering, in accordance with the invention.

### DETAILED DESCRIPTION

The following description with reference to the accompanying drawings is provided to assist in a comprehensive understanding of preferred embodiments of the invention as defined by the claims and their equivalents. It includes various specific details to assist in that understanding but these are to be regarded as merely exemplary.

An exemplary engineering tool used for engineering DCS accepts inputs including Process & Instrumentation (P&I) Diagrams, I/O Points Descriptions and user inputs to engineer a DCS based on the said inputs, using a function block network. The engineering tool includes device/control libraries that contain information about device type, function block type and communication block types.

The present invention is aimed at providing a method of engineering DCS that support dynamic capabilities. The tool further to including device/control libraries, also contain new attributes defining algorithm type (associated to processing)- Example PI or PID and algorithm step number (an execution sequence step based on architecture input). The algorithm step number could differ based on the algorithm type, if there are multiple algorithm type available as an option.

The said method [100] has been illustrated in Figure 1. According to the instant invention, the method comprises the steps of requesting the user to input an application type and to select a solution variant from one or more solution variant options [110], identifying at least one device from plurality of devices available for engineering the DCS based on the user input [120], selecting at least at least one function blocks along with its function fragments from the plurality of function blocks available in the engineering tool library based on the said user input [130], creating instances of function fragments and arranging at least one instance of function fragments considering the identified at least one device from the plurality of devices [140] and configuring the identified at least one device from the plurality of devices based on the created instances of function fragments [150].

Here, in the method provided in the invention, the step of creating instances of function fragments and arrangement of function fragments with associated or to designate a function fragment for a particular device in the DCS is carried out after analyzing the arrangement of instances of function fragment for the selected solution variant option and the associated/available devices such that the arrangement satisfies engineering specification associated with functioning of the used device or process needs or DCS [160]. Such specifications are being referred as "distributed control system need" herein in the invention.

The analysis also includes trail of options available within the DCS engineering tool by the engineering tool to try out available devices with various combinations of function blocks fragment arrangements, algorithms (based on algorithm type and algorithm step number associated with available function blocks) or solution variants to satisfy the distributed control system need in a best possible manner. The tool also suggests available options for engineering with best use of resources available in the DCS. User inputs may be taken for the same to confirm a particular option for configuration of devices based on the analyzed (created) instances of function fragments.

Thus the engineering tool provides a dynamic distribution of function fragments that may be different from the initial selection of function fragment, based on the trial analysis to find best suitability of a function fragment for a selected/available device and that which works the best as a system to meet the DCS need.

The method and the engineering tool are further illustrated with help of an exemplary illustration for application in boiler control. During configuration using the engineering tool requests user for specifying Application Type and the user selects an application type for example boiler protection. The tool requests user to select from the multiple solution variants, for illustration say Solution Variant 1 or Solution Variant 2 where the solution variants contains the following information:
a. Time Synchronization Scheme
   i. Source Device Type and Precision
   ii. Time Synch communication mechanism and Protocol scheme
b. Communication and Decision Scheme
   i. Voting Protocol scheme for decision making
   ii. Decision Maker and Participants scheme
c. Alarm Scheme
   i. Definition of communication path for propagation of alarms and Protocol scheme
   ii. Precision description and timing scheme

For illustration purpose for Boiler Protection application type the following solution variants may be considered as exemplary cases.

### Solution Variant 1

a. Time Synchronization Scheme
   1. Source Device Type = Controller and Precision =1ms
   2. Time Synch communication mechanism and Protocol scheme=SNMP
b. Communication and Decision Scheme
   1. Voting Protocol scheme =ALP(Proprietary Protocol) for decision making
   2. Decision Maker and Participants scheme (2 out of 3 Voting) Redundancy following PRP standards
   3. Capacity of Plant greater than 210MW and less than 1000MW
c. Alarm Scheme
   1. Definition of communication path for propagation of alarms and Protocol scheme = EEMUA 191 standards based HMI oriented
   2. Precision description=Sequence of events maintain 1ms for process and 1microsecond for power system events

### Solution Variant 2

a. Time Synchronization Scheme
   1. Source Device Type=External Time Source and Precision=1microsecond
   2. Time Synch communication mechanism and Protocol scheme=PTP1588
b. Communication and Decision Scheme
   1. Voting Protocol scheme (2 out of 3 Voting) for decision making
   2. Decision Maker and Participants scheme (Decision based on voting or Hybrid Quick/Prediction based decision support) and Redundancy based on HSR scheme
c. Alarm Scheme
   1. Definition of communication path=Inclusive of all linked networks(including field and controllers) for propagation of alarms and Protocol scheme = based on SysLog and more over Ethernet and also across wireless links
   2. Precision description=1microsecond across process and power system events

The user choses solution from the two options, say the user choses Solution Variant 1 to complete first step 210 in engineering.

The tool then identifies the devices supporting based on interfaces. Interfaces for SNTP is present in the Device - Say Controller 1 (a variant in Controller type) is selected by filtering the available variants in Controller type. If I/O is intelligent I/O then I/O Handling could be on I/O. As the time synchronization precision is in milliseconds, the Time Synch function in Controller library is added. Based on system safety (Safety integrity Level standard) Levels the right interface and device are selected.

Interfaces would include external and internal interfaces for example CPU = processor interface, Ethernet card= communication interface, support for a specific protocol (say SNTP) is seen as full interface support for the protocol. These are available based on device type information.

The tool based on functional organization now browses through the libraries to select function blocks that are available as groups of function fragments or logic gate elements which includes
- Time Synchronization Block
- Function Blocks for I/O Handling based on interface type
- Function Blocks responsible for peer-to-peer communication
- Function Blocks responsible for HMI interaction
- Preprocessing Function Blocks
- Basic Logical Function Blocks
- Function Blocks responsible for decision or main functions

More specific examples of Function blocks includes
Time Synch Blocks - EXEXEC- Extended Executive Function Block used with time synchronization and cycletime settings for function blocks.
Function Blocks related to I/O
Pulse Input/Period (PIPER) function Blocks, Analog Input Slave (AIS/FBS - Field Bus Slave)
HMI Related Function Blocks
Analog Exception Report Function Blocks (AO/L).

SOE/S - Sequence of Events Slave - Ability for 32 digital inputs, timestamp them based on required precision as used for identifying the alarms and events and their sequence.

Basic Function Blocks could include the AND Blocks, RCM - Remote Control Memory Blocks.

Function Blocks related to Decision Making and Execution

MultiState Device Driver capable -MSDVDR is capable of governing motor, and has four state controls with feedback.

PID Error is capable of providing proportional, integral and derivative actions on error signal from process variable and set point inputs.

The system creates instances of function or logical blocks in the engineering system. Within the grouping from selection of function blocks or logic gate elements as described above, the function block or logic instances are arranged from input to output based on the algorithm step attributes defined in library. These groups are considered as initial fragments available offline in the engineering tool.

For example an initial look at fragments could be Fragment1- Input Blocks and Time Synch Block included. Fragment 2- Analog Exception Report and Sequence of Event Slave together and Fragement3- Decision blocks PID Error and MSDVDR- Multistate Device Driver capable of controlling field equipment.

The tool performs a forward chaining analysis to see how the solution variant definitions and the arrangement of instances of function or logical blocks satisfies these criteria.
a. System detects the start time and from the input to the output of Time Synchronization fragment, the system analyses the execution sequence and checks for the time that it takes for the execution.
b. Considering that the fragments will go into multiple devices seeing virtual device boxes and considering a factor of communication overhead of 20%, the execution times are compared with the total reaction times of the Boiler Protection solution requirements <20ms
c. All the fragment blocks are checked whether they have input from the time synchronization fragment and cycle times are so that timestamp the alarms and events generated as output from these can maintain a 1ms precision.
d. The analysis continues iteratively until the conditions of the solution criteria are satisfied.
e. The result of the analysis could be
   i. Suggested modification in existing sequence numbers to match the criteria
   ii. Suggested reorganization of function blocks in fragment to be moved to another

The user can also be provided input and choose one of the solution or engineering tool may choose the first solution which satisfies the criteria.

This analysis would lead to modification in the execution sequence numbers of these functions or logic. The analysis could as well figure out that some logic or functions are better to be placed in another function network which is connected using communication logic. The system after analysis of these multiple paths arrive at an optimal path of function block network and organization of fragments.

The tool then creates communication function or logic instances to connect the fragments together based on them residing on multiple devices. These blocks therefore are added to the fragment inputs and outputs. Each fragment would now have a clear input and output or results defined. One the communication blocks are organized, again one more iteration of forwarding chaining as described above considering these blocks are performed.

Now each fragment has its own input and output points. The system now breaks down from the expected results an expected breakup for each fragment which together would satisfy the expected criteria to even the load across devices and more align to processing interfaces. For example to achieve 20ms total reaction times, fragment 1 could act in 10ms, fragment 2 in another 5ms, fragment 3 in 10ms and considering some communication load additional (5ms). Now based on this breakdown, each fragment is analyzed whether it satisfies the breakup and therefore able to work with the processing interface capabilities. For instance a device type has higher processing power the bigger fragment (like fragment 1) can be associated there.

As you might notice in the fragments the Analog Exception Report can even be residing in future in I/Os with defined capability and Sequence of Events could be defined elsewhere and so on. PID Error can as well be handled closer to I/Os.

While only certain features of the invention have been illustrated and described herein, many modifications and changes will occur to those skilled in the art.

## Claims

1. A method (100) for engineering a Distributed Control System having a plurality of devices comprising at least one Input/ Output device and at least one controller device such that the said at least one Input/ Output device and the said at least one controller device have a communicative connection, the method performed by an engineering tool comprising the steps of :
a. Requesting (110) an user to input an application type and to select a solution variant from one or more solution variant options;
b. identifying (120)at least one device from the plurality of devices for configuration based on the said user input;
c. selecting (130) at least one function block, the function block comprising a plurality of function fragments that are linked together, along with its function fragments from a plurality of function blocks available in a library based on the requested application type and selected solution variant, each function block being comprised of a plurality of function fragments that are linked together;
d. Creating (140) instances of the function fragments of the selected at least one function block and arranging (140) at least one of said instances of the function fragments considering the identified at least one device from the plurality of devices;
wherein the method further comprises the steps of:
e. analysing (160) the function fragments of the selected at least one function block considering involved device specifications, processing and communication overheads to ascertain overall functionality according to the Distributed Control System needs;
f. dynamically rearranging at least one of the instances of the function fragments in any of the plurality of devices to find the solution that satisfies one or more identified distributed control system needs; and
g. configuring (150) the identified at least one device from the plurality of devices based on the created instances of the function fragments.

2. The method (100) as claimed in claim 1, wherein the step of analysing (160) the arrangement of instances of function fragments for the selected solution variant option, and the identified at least one device to find a solution that satisfies one or more identified distributed control system needs, further includes the step of reporting the analysis results to gather user input to find the solution that satisfies one or more identified distributed control system needs.

3. The method (100) as claimed in claim 2, wherein the step of reporting the analysis results to gather user input includes reselecting a solution variant from the one or more solution variant options.

4. The method (100) as claimed in claim 2 and claim 3, wherein the step of reporting the analysis results to gather user input includes reselecting the at least one function block along with its function fragments based on the reselected solution variant.

5. The method (100) as claimed in claim 1, wherein the step of selecting (130) at least one function block along with its function fragment from the plurality of available function blocks in the library based on the requested application type and selected solution variant further includes selection of the at least one function block along with its function fragment based on algorithm type and algorithm step number associated with a plurality of available function blocks.

6. The method (100) as claimed in claim 5, wherein the step of selecting (130) the at least one function block along with its function fragment based on algorithm type and algorithm step number associated with the plurality of available function blocks is performed by the engineering tool to find a suitable function block along with its function fragment to satisfy the one or more identified distributed control system need.

7. An engineering tool for performing a method (100) for engineering a distributed control system according to claim 1, the engineering tool comprising a library of function blocks along with its function fragments, a library of devices and communication types used in the distributed control system, a module for creating function fragments for at least one device used in the distributed control system and a module for analysing instances of function fragments for at least one device used in the distributed control system,
wherein the engineering tool is configured to perform the items a. through g. of the method according to claim 1.

8. The engineering tool for a distributed control system as claimed in claim 7, wherein the module for analysing instances of function fragments comprises a library of specifications associated with device types and communication block types used in the distributed control system.

9. The engineering tool of claim 7 adapted to configure a distributed control system having a plurality of devices comprising at least one Input/ Output device and at least one controller device such that the said at least one Input/ Output device and the said at least one controller device have a communicative connection, wherein at least one device from the plurality of devices is configured using the engineering tool.

## Patentansprüche

1. Verfahren (100) zum Konstruieren eines Prozessleitsystems mit einer Mehrzahl von Vorrichtungen, die mindestens eine Eingabe-/Ausgabevorrichtung und mindestens eine Steuerungsvorrichtung umfassen, sodass die mindestens eine Eingabe-/Ausgabevorrichtung und die mindestens eine Steuerungsvorrichtung eine kommunikative Verbindung haben, wobei das Verfahren, das von einem Engineering-Tool durchgeführt wird, die folgenden Schritte umfasst:
a. Auffordern (110) eines Benutzers, eine Anwendungsart einzugeben und eine Lösungsvariante aus einer oder mehreren Optionen von Lösungsvarianten auszuwählen;
b. Identifizieren (120) von mindestens einer Vorrichtung aus der Mehrzahl von Vorrichtungen für die Konfiguration basierend auf der Benutzereingabe;
c. Auswählen (130) von mindestens einem Funktionsbaustein, wobei der Funktionsbaustein eine Mehrzahl von Funktionsfragmenten umfasst, die miteinander verbunden ist, zusammen mit seinen Funktionsfragmenten aus einer Mehrzahl von Funktionsbausteinen, die in einer Bibliothek zur Verfügung stehen, basierend auf der angeforderten Anwendungsart und der ausgewählten Lösungsvariante, wobei jeder Funktionsbaustein aus einer Mehrzahl von Funktionsfragmenten, die miteinander verbunden sind, zusammengesetzt ist;
d. Erstellen (140) von Instanzen der Funktionsfragmente des ausgewählten mindestens einen Funktionsbausteins und Anordnen (140) von mindestens einer der Instanzen der Funktionsfragmente unter Berücksichtigung der identifizierten mindestens einen Vorrichtung aus der Mehrzahl von Vorrichtungen;
wobei das Verfahren ferner die folgenden Schritte umfasst:
e. Analysieren (160) der Funktionsfragmente des ausgewählten mindestens einen Funktionsbausteins unter Berücksichtigung der Spezifikationen der beteiligten Vorrichtungen, der Verarbeitung und des Kommunikationsaufwands, um die Gesamtfunktionalität gemäß den Anforderungen des Prozessleitsystems festzustellen;
f. dynamisches Neuanordnen von mindestens einer der Instanzen der Funktionsfragmente in einer der Mehrzahl von Vorrichtungen, um die Lösung zu finden, die eine oder mehrere identifizierte Anforderungen des Prozessleitsystems erfüllt; und
g. Konfigurieren (150) der identifizierten, mindestens einen Vorrichtung aus der Mehrzahl von Vorrichtungen basierend auf den erstellten Instanzen der Funktionsfragmente.

2. Verfahren (100) nach Anspruch 1, wobei der Schritt des Analysierens (160) der Anordnung von Instanzen der Funktionsfragmente für die ausgewählte Option der Lösungsvariante und der identifizierten mindestens einen Vorrichtung, um eine Lösung zu finden, die eine oder mehrere identifizierte Anforderungen des Prozessleitsystems erfüllt, ferner den Schritt des Meldens der Analyseergebnisse umfasst, um die Benutzereingabe zu erfassen und so die Lösung zu finden, die eine oder mehrere identifizierte Anforderungen des Prozessleitsystems erfüllt.

3. Verfahren (100) nach Anspruch 2, wobei der Schritt des Berichtens der Analyseergebnisse, um die Benutzereingabe zu erfassen, das erneute Auswählen einer Lösungsvariante aus einer oder mehreren Optionen von Lösungsvarianten umfasst.

4. Verfahren (100) nach Anspruch 2 und Anspruch 3, wobei der Schritt des Berichtens der Analyseergebnisse, um die Benutzereingabe zu erfassen, das erneute Auswählen des mindestens einen Funktionsbausteins zusammen mit seinen Funktionsfragmenten basierend auf der erneut ausgewählten Lösungsvariante umfasst.

5. Verfahren (100) nach Anspruch 1, wobei der Schritt des Auswählens (130) von mindestens einem Funktionsbaustein zusammen mit seinem Funktionsfragment aus der Mehrzahl von Funktionsbausteinen, die basierend auf der angeforderten Anwendungsart und der ausgewählten Lösungsvariante in der Bibliothek zur Verfügung stehen, ferner das Auswählen des mindestens einen Funktionsbausteins zusammen mit seinem Funktionsfragment basierend auf dem Algorithmustyp und der Algorithmusschrittnummer, die mit einer Mehrzahl von verfügbaren Funktionsbausteinen verknüpft sind, umfasst.

6. Verfahren (100) nach Anspruch 5, wobei der Schritt des Auswählens (130) des mindestens einen Funktionsbausteins zusammen mit seinem Funktionsfragment basierend auf dem Algorithmustyp und der Algorithmusschrittanzahl, die mit der Mehrzahl von verfügbaren Funktionsbausteinen verknüpft sind, vom Engineering-Tool durchgeführt wird, um einen geeigneten Funktionsbaustein zusammen mit seinem Funktionsfragment zu finden, um eine oder mehrere identifizierte Anforderungen des Prozessleitsystems zu erfüllen.

7. Engineering-Tool zum Durchführen eines Verfahrens (100) zum Konstruieren eines Prozessleitsystems gemäß Anspruch 1, wobei das Engineering-Tool eine Bibliothek von Funktionsbausteinen zusammen mit seinen Funktionsfragmenten, eine Bibliothek von Vorrichtungen und Kommunikationsarten, die im Prozessleitsystem verwendet werden, ein Modul zum Erstellen von Funktionsfragmenten für mindestens eine Vorrichtung, die im Prozessleitsystem verwendet wird, und ein Modul zum Analysieren von Instanzen der Funktionsfragmente für mindestens eine Vorrichtung, die im Prozessleitsystem verwendet wird, umfasst,
wobei das Engineering-Tool so konfiguriert ist, dass es die Punkte a. bis g. des Verfahrens nach Anspruch 1 durchführt.

8. Engineering-Tool für ein Prozessleitsystem nach Anspruch 7, wobei das Modul zum Analysieren von Instanzen der Funktionsfragmente eine Bibliothek von Spezifikationen in Zusammenhang mit Vorrichtungstypen und Kommunikationsblocktypen, die im Prozessleitsystem verwendet werden, umfasst.

9. Engineering-Tool nach Anspruch 7, das so konzipiert ist, dass es ein Prozessleitsystem mit einer Mehrzahl von Vorrichtungen konfiguriert, das mindestens eine Eingabe-/Ausgabevorrichtung und mindestens eine Steuerungsvorrichtung umfasst, sodass die mindestens eine Eingabe-/Ausgabevorrichtung und die mindestens eine Steuerungsvorrichtung eine kommunikative Verbindung haben, wobei mindestens eine Vorrichtung aus der Mehrzahl von Vorrichtungen unter Verwendung des Engineering-Tools konfiguriert wird.

## Revendications

1. Procédé (100) d'ingénierie d'un système de commande distribué ayant une pluralité de dispositifs comprenant au moins un dispositif d'entrée/sortie et au moins un dispositif de commande de telle sorte que ledit au moins un dispositif d'entrée/sortie et ledit au moins un dispositif de commande aient une connexion de communication, le procédé exécuté par un outil d'ingénierie comprenant les étapes consistant à :
a. demander (110) à un utilisateur d'entrer un type d'application et de sélectionner une variante de solution parmi une ou plusieurs options de variante de solution ;
b. identifier (120) au moins un dispositif parmi la pluralité de dispositifs pour configuration sur la base de ladite entrée d'utilisateur ;
c. sélectionner (130) au moins un bloc de fonction, le bloc de fonction comprenant une pluralité de fragments de fonction qui sont reliés entre eux, en même temps que ses fragments de fonction parmi une pluralité de blocs de fonction disponibles dans une bibliothèque sur la base du type d'application demandé et de la variante de solution sélectionnée, chaque bloc de fonction étant constitué d'une pluralité de fragments de fonction qui sont reliés entre eux ;
d. créer (140) des instances des fragments de fonction dudit au moins un bloc de fonction sélectionné et agencer (140) au moins une desdites instances des fragments de fonction compte tenu dudit au moins un dispositif identifié parmi la pluralité de dispositifs ;
où le procédé comprend en outre les étapes consistant à :
e. analyser (160) les fragments de fonction dudit au moins un bloc de fonction sélectionné compte tenu des spécifications, des charges de traitement et de communication du dispositif impliqué pour vérifier la fonctionnalité globale selon les besoins du système de commande distribué ;
f. réagencer dynamiquement au moins une des instances des fragments de fonction dans n'importe lequel de la pluralité de dispositifs pour trouver la solution qui satisfait un ou plusieurs besoins identifiés du système de commande distribué ; et
g. configurer (150) ledit au moins un dispositif identifié parmi la pluralité de dispositifs sur la base des instances créées des fragments de fonction.

2. Procédé (100) selon la revendication 1, dans lequel l'étape d'analyse (160) de l'agencement d'instances de fragments de fonction pour l'option de variante de solution sélectionnée et dudit au moins un dispositif identifié pour trouver une solution qui satisfait un ou plusieurs besoins identifiés du système de commande distribué, comprend en outre l'étape d'établissement d'un rapport des résultats d'analyse pour recueillir l'entrée d'utilisateur afin de trouver la solution qui satisfait un ou plusieurs besoins identifiés du système de commande distribué.

3. Procédé (100) selon la revendication 2, dans lequel l'étape d'établissement d'un rapport des résultats d'analyse pour recueillir l'entrée d'utilisateur inclut la resélection d'une variante de solution parmi la ou les options de variante de solution.

4. Procédé (100) selon la revendication 2 et la revendication 3, dans lequel l'étape d'établissement d'un rapport des résultats d'analyse pour recueillir l'entrée d'utilisateur inclut la resélection dudit au moins un bloc de fonction en même temps que ses fragments de fonction sur la base de la variante de solution resélectionnée.

5. Procédé (100) selon la revendication 1, dans lequel l'étape de sélection (130) d'au moins un bloc de fonction en même temps que son fragment de fonction parmi la pluralité de blocs de fonction disponibles dans la bibliothèque sur la base du type d'application demandé et de la variante de solution sélectionnée comprend en outre la sélection dudit au moins un bloc de fonction en même temps que son fragment de fonction sur la base d'un type d'algorithme et d'un numéro d'étape d'algorithme associés à une pluralité de blocs de fonction disponibles.

6. Procédé (100) selon la revendication 5, dans lequel l'étape de sélection (130) dudit au moins un bloc de fonction en même temps que son fragment de fonction sur la base d'un type d'algorithme et d'un numéro d'étape d'algorithme associés à la pluralité de blocs de fonction disponibles est effectuée par l'outil d'ingénierie pour trouver un bloc de fonction approprié en même temps que son fragment de fonction pour satisfaire ledit ou lesdits besoins identifiés du système de commande distribué.

7. Outil d'ingénierie pour exécuter un procédé (100) d'ingénierie d'un système de commande distribué selon la revendication 1, l'outil d'ingénierie comprenant une bibliothèque de blocs de fonction en même temps que ses fragments de fonction, une bibliothèque de dispositifs et de types de communication utilisés dans le système de commande distribué, un module pour créer des fragments de fonction pour au moins un dispositif utilisé dans le système de commande distribué et un module pour analyser des instances de fragments de fonction pour au moins un dispositif utilisé dans le système de commande distribué,
où l'outil d'ingénierie est configuré pour exécuter les points a. à g. du procédé selon la revendication 1.

8. Outil d'ingénierie pour un système de commande distribué selon la revendication 7, dans lequel le module pour analyser les instances de fragments de fonction comprend une bibliothèque de spécifications associée aux types de dispositifs et aux types de blocs de communication utilisés dans le système de commande distribué.

9. Outil d'ingénierie selon la revendication 7, conçu pour configurer un système de commande distribué ayant une pluralité de dispositifs comprenant au moins un dispositif d'entrée/sortie et au moins un dispositif de commande de telle sorte que ledit au moins un dispositif d'entrée/sortie et ledit au moins un dispositif de commande aient une connexion de communication, dans lequel au moins un dispositif parmi la pluralité de dispositifs est configuré en utilisant l'outil d'ingénierie.
